# FASCICULE DE BREVET EUROPEEN

(11) **EP 0 560 655 B1**
(45) Date de publication et mention de la délivrance du brevet: **06.11.1996**
(21) Numéro de dépôt: 93400573.7
(22) Date de dépôt: 05.03.1993
(51) Int. Cl.: A01B 45/00, A01B 31/00, A01B 49/02

(54) **Procédé et machine pour l'entretien d'un terrain planté d'herbe, par exemple une piste de courses ou d'entraînements hippiques engazonnée**
Verfahren und Maschine zum Pflegen einer Rasenfläche wie einer Pferderennbahn oder Pferdetrainingsbahn
Method and machine for the maintenance of a grass-covered area, such as a race track or a training ground for horses

(30) Priorité: 11.03.1992 FR 9202895
(43) Date de publication de la demande: 15.09.1993
(73) Titulaire: DOUCET FRERES, F-51210 Montmirail (FR)
(72) Inventeur: Doucet, Bernard, I-51210 Montmirail (FR)
(74) Mandataire: Rinuy, Santarelli

(56) Documents cités:
- BE-A- 869 331
- CH-A- 353 393
- DE-U- 9 006 763
- FR-A- 2 414 592
- GB-A- 2 166 632
- US-A- 2 706 881

## Description

L'invention a trait à l'entretien d'un terrain planté d'herbe.

Si l'on prend l'exemple d'une piste de courses ou d'entraînements hippiques engazonnée, on sait qu'après le passage d'une série de courses, ou lorsqu'un entraînement vient d'être effectué, la piste engazonnée est endommagée par les pieds des chevaux qui y ont effectué des trous.

Pour remettre en état la piste, on emploie dix, quinze voire vingt personnes équipées d'outils en forme de crochet à long manche (appelés hoyaux), pour reboucher les trous.

L'invention vise à rendre plus rapide ce genre d'opération.

Elle propose à cet effet un procédé pour l'entretien d'un terrain planté d'herbe, caractérisé en ce qu'on rebouche des trous qui y ont été effectués en faisant parcourir ledit terrain par une machine comportant un rateau rotatif à l'extrême avant, et un dispositif de damage du sol derrière le rateau rotatif.

Grâce au rateau, la terre sortie du sol est ramenée dans les trous que présente celui-ci, le fait que le rateau rotatif soit disposé à l'extrême avant lui permettant d'agir sur de la terre facile à ratisser puisqu'elle n'a pas été écrasée précédemment par une roue ou un organe similaire (dans le cas contraire, la terre serait accrochée aux brins d'herbe sur lesquels elle a été tassée).

La terre ramenée dans les trous par le rateau est ensuite tassée par le dispositif de damage pour qu'elle y demeure.

Le procédé selon l'invention est beaucoup plus rapide que le procédé d'entretien précité, il est par exemple possible de reboucher une piste d'un champ de courses hippiques en deux à quatre heures, avec une seule personne, au lieu d'un jour ou deux avec au moins dix personnes.

L'invention s'applique à toute sorte de terrain planté d'herbe, par exemple un terrain de golf, de polo, de foot-ball, de rugby, de tennis sur gazon, ou encore des terrains qui ne sont pas prévus pour le sport, tels qu'une prairie ou un herbage.

L'invention vise toutefois plus particulièrement un procédé pour l'entretien d'une piste de courses ou d'entraînements hippiques engazonnée, caractérisé en ce qu'on rebouche les trous que les chevaux y ont effectué avec une machine comportant un rateau rotatif à l'extrême avant, entraîné pour tourner avec une vitesse tangentielle au sol allant de l'arrière vers l'avant, et un dispositif de damage du sol derrière le rateau rotatif, en faisant parcourir la piste par la machine dans un sens inverse à celui dans lequel les chevaux se sont déplacés.

Il se trouve en effet que les pieds des chevaux créent des trous dans le sol en relevant ou en projetant vers l'avant une languette de terre. Le travail du rateau sera donc particulièrement efficace s'il circule en sens inverse de celui dans lequel les chevaux se sont déplacés, puisqu'il va ramener dans les trous les languettes arrachées, et replier les languettes de terre restées rattachées, dans le sens qui les ramène dans les trous, le sens de rotation du rateau étant prévu pour effectuer cette opération de retournement de la languette dans les meilleures conditions.

L'invention vise également un procédé pour l'entretien d'une piste de courses ou d'entraînements hippiques engazonnée, caractérisé en ce qu'on rebouche les trous que les chevaux y ont effectué avec une machine comportant un rateau rotatif à l'extrême avant, entraîné pour tourner avec une vitesse tangentielle au sol allant de l'avant vers l'arrière, et un dispositif de damage du sol derrière le rateau rotatif, en faisant parcourir la piste par la machine dans le même sens que celui dans lequel les chevaux se sont déplacés.

Ces trous sont ainsi rebouchés par le rateau d'une manière un peu similaire à celle par laquelle les personnes équipées du crochet à long manche de l'art antérieur ramènent la terre dans les trous en rapprochant d'eux le crochet, en parcourant la piste dans le même sens que celui des chevaux. Le résultat obtenu est satisfaisant, sans être aussi bon que celui obtenu avec le procédé qui vient d'être exposé.

Sous un autre aspect, l'invention a trait à une machine qui convient pour la mise en oeuvre des procédés qui viennent d'être exposés.

Elle propose à cet effet une machine pour l'entretien d'un terrain planté d'herbe, caractérisée en ce qu'elle est destinée à parcourir ledit terrain pour reboucher des trous qui y ont été effectués, et en ce qu'elle comporte à cet effet :
- un rateau rotatif disposé à l'extrême avant de la machine ; et
- un dispositif de damage du sol, disposé derrière le rateau rotatif.

Selon des caractéristiques préférées, la machine comporte, derrière le rateau rotatif et devant le dispositif de damage, un dispositif de remplissage de trous comportant :
- des moyens de stockage d'une matière de remplissage ;
- des moyens de détection de trous ; et
- des moyens pour déverser sur le sol de la matière de remplissage quant un trou est détecté.

Avec ces caractéristiques, la machine selon l'invention effectue un travail très complet de remise en état du terrain, puisque les trous non encore rebouchés après le passage du rateau sont comblés par de la matière de remplissage, qui sera ensuite tassée par le dispositif de damage.

Selon d'autres caractéristiques préférées, la machine comporte un rouleau disposé derrière le rateau rotatif et devant le dispositif de damage, et plus précisément devant le dispositif de remplissage de trous si la machine en est munie.

Ce rouleau procure après le passage du rateau un effet de nivellement bénéfique avant la détection de trous, s'il y a lieu, et en tout cas avant le damage.

Selon d'autres caractéristiques préférées, la machine comporte des moyens de commande de l'orientation de l'axe de rotation dudit rouleau.

On peut donc diriger la machine avec ces moyens de commande, alors qu'il serait particulièrement difficile, voire impossible, de la diriger par d'autres moyens tels que la direction d'un tracteur qui serait disposé derrière le dispositif de damage. En outre, on évite d'arracher de l'herbe quand on fait tourner la machine.

Selon d'autres caractéristiques préférées, la machine comporte des roues motrices disposées derrière le dispositif de damage.

Avec cette disposition, on minimise l'enfoncement des roues motrices dans le sol, puisque celui-ci est déjà damé lorsque les roues y prennent appui.

Selon d'autres caractéristiques préférées, la machine comporte un dispositif releveur d'herbe, disposé à l'extrême arrière.

L'herbe est ainsi ramenée à sa position verticale d'origine, qu'elle avait perdue lorsqu'elle a été tassée par la machine.

L'exposé de l'invention sera maintenant poursuivi par la description d'un exemple de réalisation donnée ci-après à titre illustratif et non limitatif, en référence aux dessins annexés. Sur ceux-ci :
- la figure 1 est un schéma montrant comment les pieds des chevaux endommagent les pistes de courses ou d'entraînements ;
- la figure 2 montre en agrandissement un trou effectué par le pied d'un cheval ;
- les figures 3 et 4 sont respectivement des vues de côté et de dessus, avec arrachements partiels, d'une machine conforme à l'invention ;
- les figures 5 et 6 sont des vues, respectivement de côté et de dessus, en agrandissement, de la partie de la machine des figures 3 et 4 qui est attelée à l'avant du tracteur ;
- les figures 7 et 8 sont des vues, respectivement de côté et de dessus, en agrandissement, du dispositif releveur d'herbe de la machine des figures 3 et 4 qui est attelé à l'arrière du tracteur ;
- les figures 9 et 10 sont des vues similaires aux figures 3 et 5, mais montrant la machine en position de transport ;
- la figure 11 montre des éléments entrant dans la composition du rouleau qui fait partie de la machine ;
- les figures 12 et 13 illustrent des variantes de ces éléments ; et
- la figure 14 montre l'un des disques dont est composé une variante du rouleau.

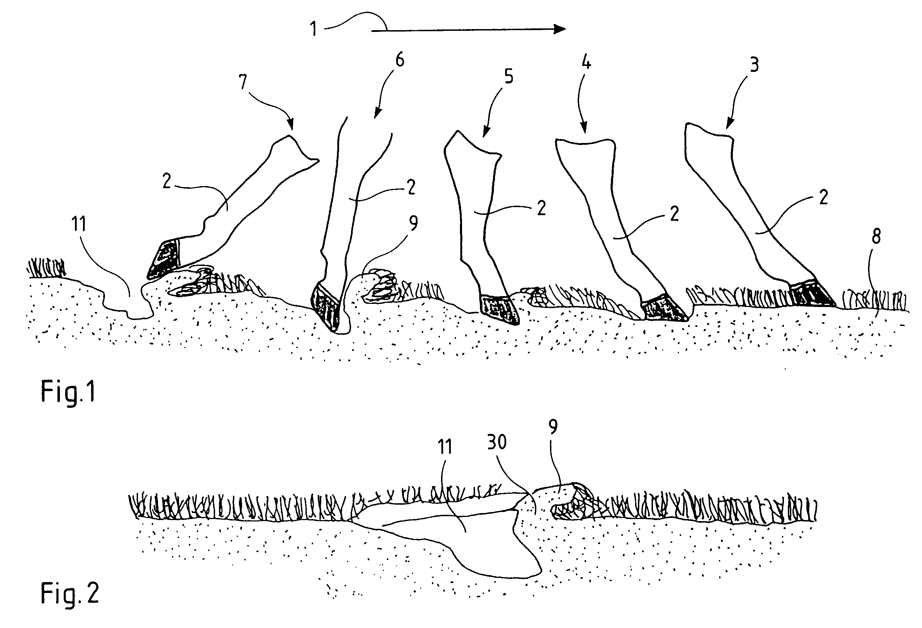

La figure 1 montre cinq positions successives 3 à 7, respectivement, prises par le pied 2 d'un cheval entre le moment où il arrive sur le sol 8 d'une piste de courses ou d'entraînements engazonnée et celui où il le quitte, le cheval se déplaçant de la gauche vers la droite, comme montré par la flèche 1.

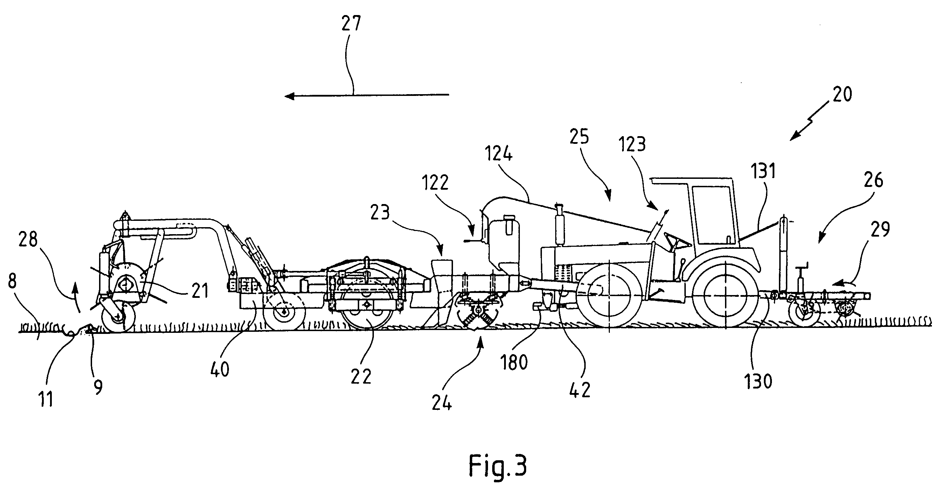

On voit que le sol 8 se creuse au fur et à mesure que le pied 2 s'y appuie et pivote, en même temps que sort de terre une languette 9 qui est parfois éjectée en avant par le pied du cheval, lorsqu'il se retire du trou 11 qui a été créé, mais qui le plus souvent reste rattachée au sol en étant repliée vers l'avant, comme montré sur la position 7 de la figure 1 et sur les figures 2 et 3.

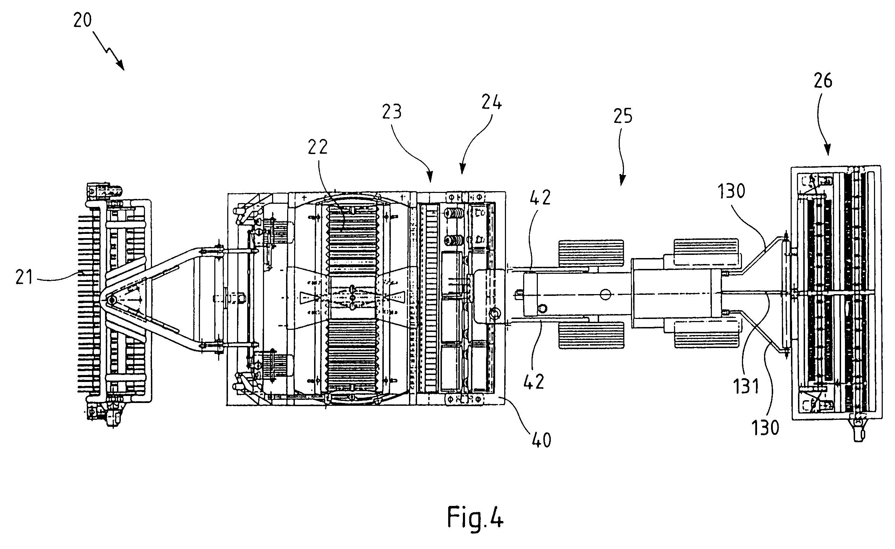

La machine 20 montrée sur les figures 3 et 4 comporte un rateau rotatif 21 à l'extrême avant, suivi dans l'ordre par un rouleau 22, par un dispositif 23 de remplissage de trous, par un dispositif 24 de damage du sol, par un tracteur 25, et par un dispositif 26 releveur d'herbe, disposé à l'extrême arrière.

De préférence, la machine 20 est conduite pour parcourir la piste de courses hippiques en sens inverse de celui dans lequel les chevaux se sont déplacés, comme montré par la flèche 27 sur la figure 3, le rateau rotatif 21 étant entraîné pour tourner avec une vitesse tangentielle au sol allant de l'arrière vers l'avant, c'est-à-dire dans le sens montré par la flèche 28.

Grâce à l'avancement de la machine 20 et au mouvement rotatif du rateau 21, les languettes 9, et plus généralement la terre sortie du sol 8, est ramenée dans les trous 11 que présente celui-ci, et en particulier les languettes 9 restées rattachées au sol 8 sont ramenées par retournement dans le trou 11 en pivotant autour de la zone de rattachement 30 (figure 2), qui forme une sorte de charnière.

La machine 20 peut également être conduite pour parcourir la piste dans le même sens que celui dans lequel les chevaux ont couru (sens 1), le rateau 21 étant entraîné pour tourner avec une vitesse tangentielle au sol allant de l'avant vers l'arrière (sens inverse au sens 28). Les résultats ainsi obtenus sont fatisfaisants, mais ils sont moins bons qu'avec les sens 27 et 28.

En effet, lorsque le rateau 21 tourne dans le sens 28, il pousse devant lui la matière qui ne trouve pas immédiatement un trou, de sorte que cette matière peut en remplir un ultérieurement. En revanche, quand le rateau tourne en sens inverse, la matière qui ne trouve pas immédiatement un trou reste sur le terrain, en y formant une bosse.

Après le passage du rateau 21, le rouleau 22 nivelle le sol, les trous restés béants sont détectés et remplis par le dispositif 23, le sol est ensuite damé par le dispositif 24 de façon que la matière ramenée dans les trous y demeure, et grâce au dispositif 26, on relève l'herbe qui a été couchée lors du passage de la machine, notamment par le rouleau 22, le dispositif de damage 24 et le tracteur 25, le dispositif 26 comportant deux peignes rotatifs entraînés pour tourner avec une vitesse tangentielle au sol allant de l'avant vers l'arrière, comme montré par la flèche 29 sur la figure 3.

On va maintenant décrire plus en détail les divers éléments de la machine 20.

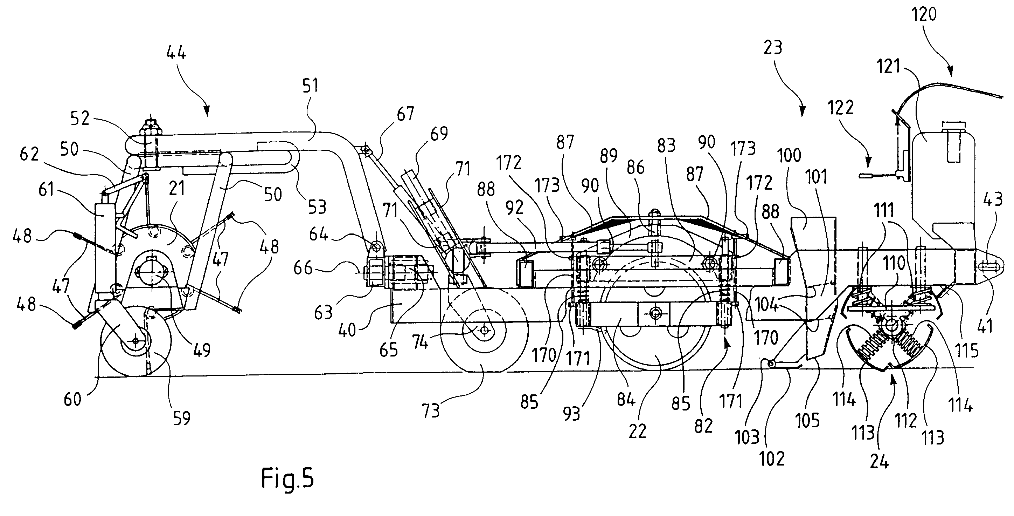

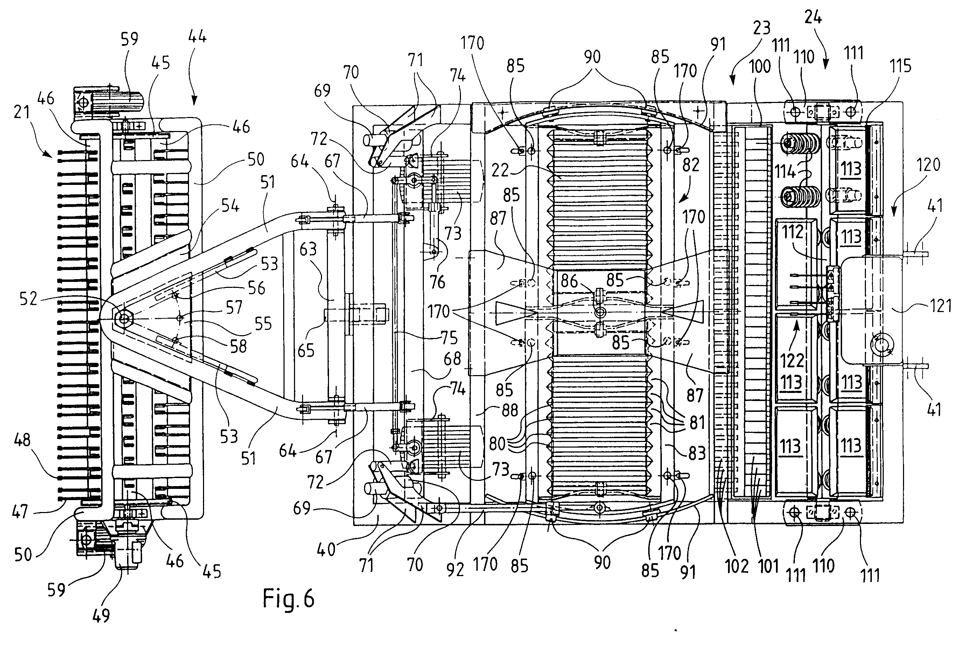

La partie de celle-ci attelée à l'avant du tracteur 25 (voir figures 5 et 6) comporte un bâti rectangulaire 40 muni à l'arrière de pattes 41 qui permettent l'attelage sur les bras 42 (figures 3 et 4) de relevage avant du tracteur 25. Les pattes 41 présentent des lumières oblongues 43, afin de laisser une certaine liberté au bâti 40 par rapport au tracteur 25.

Le rateau rotatif 21 est porté par une structure 44 attelée à l'avant du bâti 40. Ce rateau comporte un tambour central formé par des disques d'extrémité 45 reliés par des barres transversales 46, ici au nombre de 6, sur chacune desquelles est montée une rangée de dents souples 47 de type connu, formées chacune par un fil d'acier avec un enroulement en spirale entre une extrémité de fixation sur le tambour et une portion rectiligne s'étendant jusqu'à l'extrémité libre de la dent, chacune de celles-ci étant munie à cette extrémité d'un embout 48 en matière plastique, prévu pour éviter de blesser l'herbe ou le gazon.

L'entraînement du rateau rotatif 21 se fait grâce à un moteur hydraulique 49 directement accouplé sur le tambour, celui-ci étant monté dans des paliers d'une double fourche 50, elle-même fixée à une double potence 51, grâce à un pivot vertical 52 disposé à l'extrémité avant de la portion horizontale de la double potence, qui est en forme de triangle, et grâce à des glissières 53 dans lesquelles est engagée la portion de la double fourche 50 située entre le pivot 52 et sa traverse supérieure arrière. Des plaques 54 et 55 sont prévues dans cette région, respectivement sur la double fourche 50 et sur la double potence 51. Dans la plaque 55 sont pratiqués trois trous, respectivement 56, 57 et 58, prévus pour coopérer avec un trou correspondant de la plaque 54, grâce à un boulon : lorsque le boulon est mis en place dans le trou 57 et dans le trou de la plaque 54, le rateau rotatif 21 est dans la position illustrée sur les dessins, c'est-à-dire qu'il est maintenu avec son axe de rotation orienté transversalement à la direction de déplacement prévue pour la machine. Lorsque le boulon est mis en place dans le trou 56 et dans le trou de la plaque 54, l'axe de rotation du rateau 21 est en oblique par rapport à la direction de déplacement prévue pour la machine, à peu près à 45°, et il en va de même quand on utilise le trou 58, mais avec une inclinaison opposée.

Lorsque le rateau 21 est disposé en oblique par rapport à la direction d'avancement de la machine, et que le rateau 21 tourne dans le sens 28, l'éventuelle matière en excès (par rapport au besoin des trous) en avant du rateau, est ramenée sur un côté de la machine (côté droit pour le trou 58 et côté gauche pour le trou 57), cette matière en excès pouvant être récupérée dans un réceptacle approprié (non représenté) disposé sur un côté de la machine, équipé par exemple d'un tiroir avec trappe basculante afin de le vider régulièrement à des points de collecte.

On notera cependant qu'on obtient généralement les meilleurs résultats sur les pistes hippiques avec la configuration illustrée, où l'axe de rotation du rateau est transversal à la direction de déplacement prévue pour la machine.

De chaque côté de la double fourche 50, il est prévu une roue 59 de contact avec le sol, montée comme une roue de fauteuil grâce à une fourche 60 dont l'extrémité supérieure peut pivoter autour d'un axe vertical, chaque fourche 60 étant montée à la base d'un dispositif du genre cric fixé sur un montant avant respectif de la double fourche 50, de sorte que l'on peut régler la hauteur de travail du rateau 21 avec la manivelle 62.

La structure 44 comporte en outre un palonnier 63 aux extrémités duquel la double potence 51 est montée pivotante autour d'un axe 64 parallèle à la direction générale du palonnier, c'est-à-dire transversal à la direction de déplacement prévue pour la machine, le palonnier étant lui-même articulé en son centre par rapport au bâti 40 grâce à un pivot horizontal 65 orienté suivant le plan de symétrie longitudinal du bâti 40. Grâce à ce montage, le rateau rotatif 21 peut osciller autour d'un axe de roulis 66 correspondant à celui du pivot 65, et autour de l'axe de tangage 64.

Deux amortisseurs 67 sont prévus pour limiter les mouvements de roulis et de tangage. Ils sont chacun disposés entre l'un des montants de la double potence 51, et une poutre transversale 68 montée coulissante en hauteur par rapport au bâti 40 : à chacune de ses extrémités est soudé un barreau cylindrique plein 69 qui glisse dans un manchon 70 fixé à des consoles 71 soudées sur le bâti 40, un vérin 72 étant prévu en parallèle à chaque ensemble 69-70, également entre les consoles 71 et la poutre 68, afin de commander la hauteur de cette dernière par rapport au bâti 40.

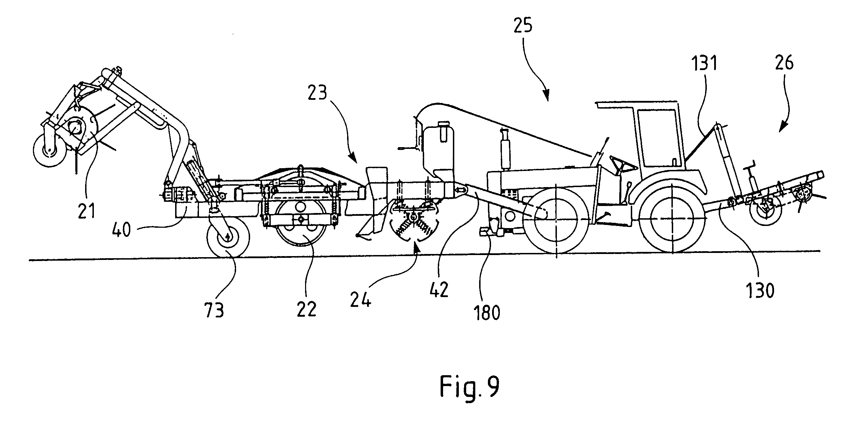

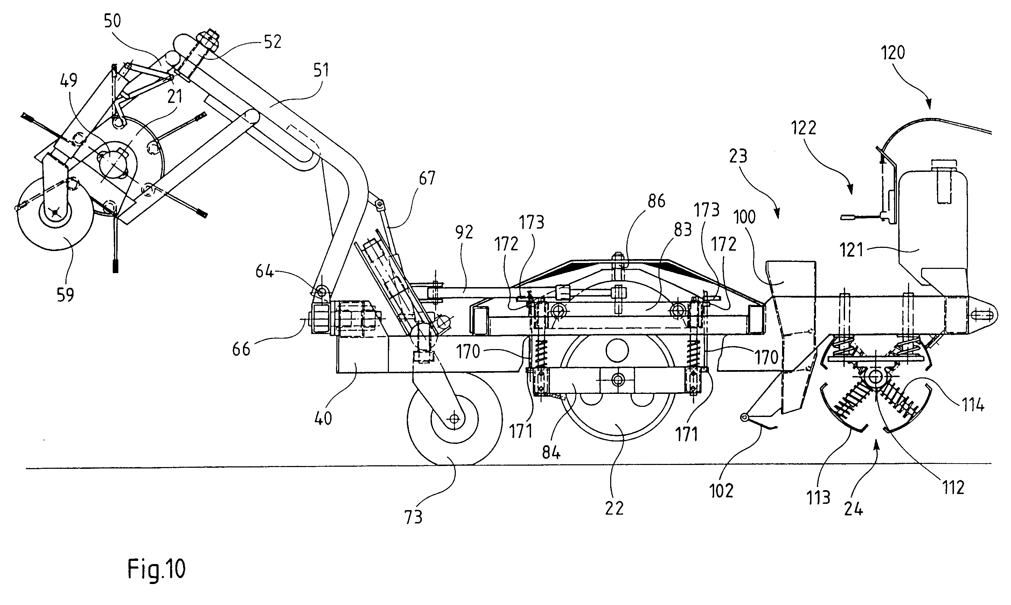

Lorsqu'on fait sortir la tige des vérins 72, la poutre 68 s'abaisse par rapport au châssis 40, les amortisseurs 67 s'allongent jusqu'à leur butée de longueur maximale, et lorsque la poutre 68 continue à descendre, la double potence 51 pivote autour de l'axe 64, ce qui relève le rateau rotatif 21 (voir figures 9 et 10).

On observera que les consoles 71 sont inclinées vers l'avant, pour des raisons de gain de place.

Un système à deux roues directrices 73 est également monté sur la poutre 68 : chacune des deux roues 73 est montée dans une fourche 74 elle-même montée à pivotement autour d'un axe vertical sur la poutre 68, les deux fourches étant reliées par une barre 75 qui coopère à chaque extrémité avec une bielle liée à la fourche, la bielle correspondant à la roue de droite étant double et reliée à la tige d'un vérin 76 dont le corps est relié à la poutre 68, de sorte que l'on peut commander l'orientation de l'axe de rotation des roues 73 avec le vérin 76.

Les roues 73 servent à effectuer le réglage en hauteur de la partie de la machine poussée par le tracteur 25, cette partie poussée étant supportée partiellement par les roues 73 en position de travail (figures 3 à 6). En position de transport (figures 9 et 10), la partie poussée de la machine est supportée par les roues 73 et portée par les bras 42.

Le rouleau 22 présente une surface de contact avec le sol qui est fermée, c'est-à-dire que cette surface ne comporte pas d'orifices par lesquels la terre pourrait pénétrer à l'intérieur du rouleau, et cette surface présente une succession régulière de pleins et de creux annulaires, respectivement 80 et 81.

Ce rouleau est monté sur un faux châssis 82 formé par deux cadres 83 et 84 superposés, un cadre inférieur 84 sur lequel le rouleau 22 est monté librement à rotation, et un cadre supérieur 83 qui coopère avec le bâti 40, les cadres 83 et 84 étant reliés par des amortisseurs 85, ici au nombre de huit. Le faux châssis 82, et plus précisément le cadre supérieur 83 est articulé en son centre, qui correspond au centre du rouleau 22, sur un pivot vertical 86 porté par le bâti 40 : des consoles renforcées 87 portées par des traverses 88 sont prévues sur le bâti pour supporter le pivot 86, celui-ci étant fixé au cadre 83 grâce à des consoles 89.

Le faux châssis 82, et plus précisément le cadre 83, est muni de chaque côté de deux galets 90 qui coopèrent avec un chemin de roulement 91 du bâti 40 décrivant une portion de cercle concentrique au rouleau 22, et donc au pivot 86 : avec ce montage, on peut faire varier l'orientation par rapport au bâti 40 de l'axe de rotation du rouleau 22. Pour pouvoir commander cette orientation, un vérin 92 est prévu, ici avec sa tige liée au faux châssis 82 (au cadre 83), et son corps aux consoles 71.

Un racleur ou décrottoir 93, ayant une forme qui épouse les pleins et les creux 80 et 81 est prévu pour éliminer les résidus d'herbe et de terre qui pourraient rester collés au rouleau, et notamment s'accumuler dans les creux 81, bien que la forme de sa surface de contact avec le sol minimise l'adhérence de ces résidus.

Les amortisseurs 85 sont totalement souples, ils procurent essentiellement une fonction de montage à coulissement vertical du rouleau 22 par rapport au bâti 40, les ressorts des armotisseurs étant simplement prévus pour éviter les chocs brutaux entre les cadres 83 et 84.

En étant ainsi suspendu, le rouleau 22 ne supporte en position de travail pratiquement aucun effort provenant du bâti 40, de sorte qu'il applique sur le sol un effort essentiellement dû à son propre poids, il réalise par conséquent son effet de nivellement essentiellement grâce à son propre poids, qui est relativement réduit pour éviter de dégrader le terrain.

En outre de cet effet de nivellement, le rouleau 22 sert à diriger la machine 20, grâce au vérin 92. En étant ainsi dirigée, la machine 20 peut tourner relativement court malgré sa grande longueur, et sans que le rouleau 22 n'effectue de translation parallèle à son axe de rotation, translation qui aurait eu pour effet d'arracher l'herbe ou le gazon.

Le système de direction à roues 73 est toutefois utile en position de transport de la machine (figures 9 et 10), la partie de la machine située en avant du tracteur 25 reposant alors sur les roues 73.

Dans l'exemple illustré, les roues 73 sont simples, mais dans des variantes non illustrées, où le sol à entretenir est plus meuble, on remplace les roues 73 par des roues doubles, voire triples.

Dans l'exemple illustré, le rouleau 22 est mis en rotation simplement parce qu'il est en contact avec le sol (il est monté librement à rotation), mais dans une variante non illustrée il est entraîné, par exemple par un moteur asservi de sorte que le rouleau 22 ait une vitesse tangentielle égale à la vitesse d'avancement de la machine. Cette variante est utile notamment dans des circonstances où le rouleau 22 aurait tendance à glisser sans rouler sur le sol.

Le dispositif de remplissage de trous 23 comporte une trémie 100 qui débouche à sa base dans une multitude de cheminées 101 à chacune desquelles correspond un palpeur 102 en forme de patin allongé disposé longitudinalement en avant de la cheminée, articulé à son extrémité avant 103 avec un ressort tel que le patin 102 a tendance à tourner autour de l'articulation 103 pour s'enfoncer dans le sol.

Lorsqu'un patin 102 passe sur un trou non rebouché, il pivote autour de l'articulation 103, ce qui déclenche l'ouverture des trappes 104, de sorte que de la matière de remplissage s'écoule par l'ouverture inférieure 105 de la cheminée 101, cette matière venant remplir le trou détecté par le palpeur 102. Dans l'exemple représenté, la matière de remplissage est constituée par des galettes de terre sur chacune desquelles pousse du gazon, de sorte qu'après rebouchage, le trou est directement garni de gazon. Ainsi qu'on le voit sur la figure 6, les cheminées 101 et les palpeurs 102 sont relativement étroits, ce qui permet de détecter et de reboucher un trou de faible largeur. Pour les trous de grande largeur, il y a plusieurs palpeurs 102 qui ouvrent les trappes 104, et le trou est rempli avec plusieurs galettes de gazon. La disposition des cheminées est donc telle que tous les trous sont rebouchés.

Le dispositif de damage 24 a la forme générale d'un cylindre, il est monté librement à rotation sur le bâti 40, et plus précisément sur des plaques 110 reliées au bâti 40 proprement dit par des amortisseurs 111 réglables en hauteur. Le dispositif de damage 24 comporte un arbre central 112, ici à section carrée, et des semelles périphériques de damage 113 reliées chacune à l'arbre 112 par au moins un (ici deux) rayon 114 axialement élastique, qui comportent ici deux éléments formant un assemblage télescopique et un ressort. Les semelles 113 sont associées en plusieurs rangées comportant chacune plusieurs semelles, ici quatre rangées de quatre semelles.

Lorsqu'une semelle 113 rentre en contact avec le sol, par exemple la semelle dessinée en bas à gauche sur la figure 5, le ou les rayon(s) 114 qui la porte est (sont) détendu(s) et au fur et à mesure que la machine avance, c'est-à-dire que le dispositif rotatif de damage tourne, le ou les rayon(s) 114 se comprime(nt) de sorte que l'effort exercé sur le sol croît, cet effort atteint un maximum lorsque le ou les rayon(s) sont verticaux, puis cet effort décroît jusqu'à ce que la semelle quitte le sol, de sorte qu'on reproduit le mouvement de damage classiquement effectué en tapant sur le sol avec une dame animé d'un mouvement alternatif vertical, mais avec davantage de souplesse, et sans qu'il soit besoin que le dispositif de damage soit un outil animé.

Un racleur ou décrottoir 115, comportant une bande en caoutchouc résistant, est prévu pour nettoyer les semelles de damage 113.

Il est avantageux que chaque rangée comporte plusieurs semelles, on évite ainsi que l'opération de damage soit perturbée par le relief du terrain, et notamment qu'une bosse isolée perturbe le damage sur toute la largeur de la machine.

Les amortisseurs 111 sont relativement rigides de sorte qu'en position de travail l'ensemble dont l'ossature est le bâti 40, est supporté par le dispositif 24, et par les roues 73. Il s'exercera donc une charge sur le dispositif 24, utile pour lui permettre d'assurer sa fonction de damage.

En position de travail, les bras 42 servent simplement à pousser le bâti 40, et pas à faire supporter une partie de son poids par le tracteur 25 : les bras 42 sont actionnés chacun par un vérin simple effet qui n'agit pas en position de travail.

Pour passer en position de transport (figures 9 et 10), on agit sur ces vérins pour relever les bras 42 et sur les vérins 72 pour abaisser les roues 73, le bâti 40 étant alors supporté à l'avant par les roues 73 et porté à l'arrière par les bras 42. Le dispositif de damage 24 n'est pas en contact avec le sol en position de transport, il est suspendu au bâti 40 par les amortisseurs 111 (une goupille est disposée transversalement au sommet de la tige de chaque amortisseur 111, laquelle goupille porte sur le dessus du bâti 40). Le rouleau 22 est également hors de contact avec le sol, il est suspendu au bâti 40 (et plus précisément au cadre 83) grâce à des moyens de limitation de l'abaissement maximum du rouleau 22 par rapport au bâti 40, ici des vis 170 disposées chacune parallèlement à un amortisseur 85, dont la tige filetée coopère avec un écrou 171 solidaire du cadre 84, et dont le sommet de la tige coulisse dans un oeil 172 solidaire du cadre 83 : le rouleau 22 peut s'abaisser par rapport au bâti 40 jusqu'à ce que la tête 173 de la vis 170 rencontre l'oeil 172 (voir figure 10). En faisant tourner les vis 170, on peut régler la hauteur d'abaissement maximale du rouleau 22, en fonction du terrain sur lequel on travaille, et même neutraliser l'action du rouleau 22 en position de travail : si l'on fait tourner suffisamment les vis 170, le rouleau 22 finit par être suspendu au bâti 40 sans être en contact avec le sol alors que la partie de la machine 20 située en avant du tracteur 25 est en position de travail.

Au cas où l'on supprime ainsi le contact du rouleau 22 avec le sol en position de travail, on dirige la machine avec les roues 73.

Dans une variante non représentée, les moyens de limitation de l'abaissement maximum du rouleau 22 sont formés par des vérins, au lieu des vis 170.

Dans l'exemple illustré, le dispositif de damage 24 est mis en rotation simplement parce qu'il est en contact avec le sol (il est monté librement à rotation), mais dans une variante non illustrée il est entraîné, par exemple par un moteur asservi de sorte que le dispositif 24 ait une vitesse tangentielle égale à la vitesse d'avancement de la machine. Cette variante est utile notamment dans des circonstances où le dispositif 24 aurait tendance à glisser sans rouler sur le sol.

On trouve enfin à l'arrière de l'ensemble semi-porté poussé par le tracteur 25, un système hydraulique 120 qui comporte un réservoir d'huile 121, connecté à une pompe 180 accouplée sur la prise de force du tracteur 25, et un ensemble 122 de manettes de commande, au nombre de quatre : l'une des manettes sert à commander la mise en fonctionnement et la vitesse du moteur 49 d'entraînement du rateau rotatif 21, une deuxième manette sert à commander le vérin 76, c'est-à -dire le système de direction à roues 73, une troisième manette sert à commander le vérin 92, c'est-à-dire le moyen de direction comportant le rouleau 22, et une quatrième manette sert à commander les vérins 72, c'est-à-dire la hauteur de la poutre 68, et notamment le passage de la position de travail montrée sur les figures 3 à 6, à la position de transport montrée sur les figures 9 et 10.

Le tracteur 25 est un tracteur articulé d'un type bien connu utilisé pour les espaces verts, il est muni d'un ensemble 123 de manettes similaire à l'ensemble 122, auquel il est relié par des téléflexibles 124 (voir figure 3), de sorte que le chauffeur du tracteur peut commander la partie poussée de la machine depuis son siège.

Le dispositif releveur d'herbe 26 est attelé classiquement à l'arrière du tracteur 25 par un système à trois points, avec deux biellettes basses 130 et une biellette haute 131, les biellettes 130 coopérant avec un palonnier 132 articulé en son centre à un cadre 134 grâce à un pivot horizontal 133 disposé dans le plan de symétrie de la machine, la biellette 131 coopérant avec un montant 135 disposé au centre de la traverse avant du cadre 134.

Le dispositif releveur d'herbe 26, est supporté par des roues 136 montées en roues de fauteuil comme les roues 59, avec une sorte de cric 137 muni à sa partie supérieure d'une manivelle avec laquelle on peut régler la hauteur des roues 136.

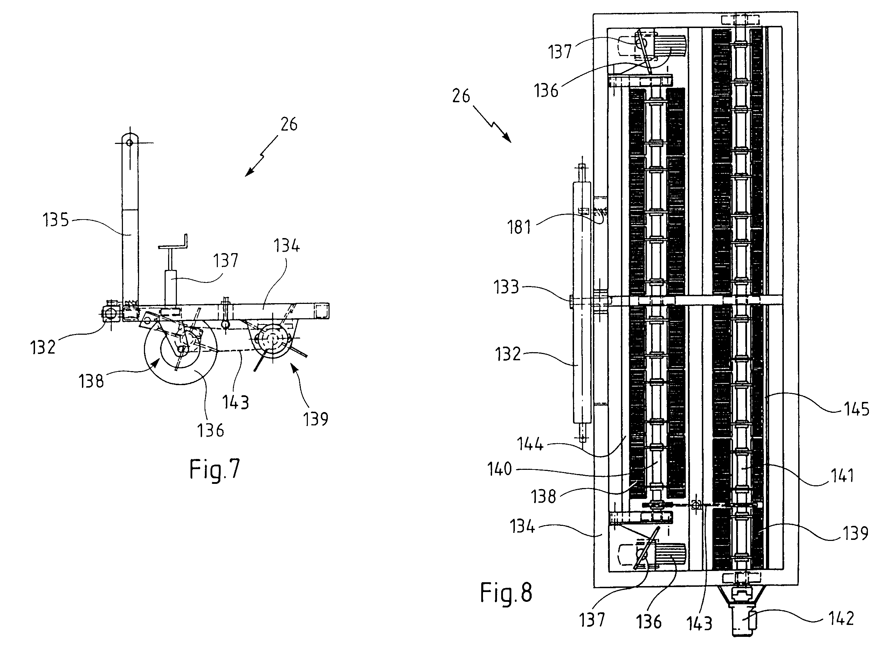

En position de transport, le dispositif releveur d'herbe 26 est relevé (voir figure 9), de la façon classique bien connue pour les attelages à trois points, après blocage du palonnier 132 vis à vis du cadre 134 grâce au dispositif 181 (voir figure 8).

Deux peignes rotatifs respectifs 138 et 139 sont disposés l'un derrière l'autre, ils sont formés chacun d'un arbre central 140 ou 141 sur lequel sont disposées plusieurs rangées, ici quatre, de fibres en matière plastique, du genre balai. Les peignes 138 et 139 sont entraînés en rotation grâce à un moteur hydraulique 142 connecté à la centrale hydraulique du tracteur 25, le moteur 142 étant directement accouplé sur l'arbre 141, une transmission 143 par chaîne et pignon étant prévue entre les arbres 141 et 140. Des barres vibrantes 144 et 145 sont respectivement prévues comme décrottoir des peignes 138 et 139, afin de les débarrasser des fragments d'herbe qui pourraient être pris dans les fibres.

Dans une variante non représentée, le peigne 138 n'est muni de fibres que sur la portion située derrière les roues du tracteur 25, et est disposé plus bas que le peigne 139 : il rajoute ainsi une action de redressement de l'herbe qui complète celle du peigne 139, exactement à l'emplacement où l'herbe a été davantage écrasée par les roues du tracteur 25.

Dans l'exemple illustré, le peigne 138 comporte également des fibres de part et d'autre des roues du tracteur, mais il est moins large que le rotor 139.

Dans une autre variante non illustrée, le dispositif releveur d'herbe comporte un seul peigne rotatif.

Dans une autre variante non illustrée, le dispositif releveur d'herbe 26 comporte sa propre centrale hydraulique, avec sa pompe branchée sur la prise de force du tracteur.

On va maintenant décrire plus en détail la constitution du rouleau 22.

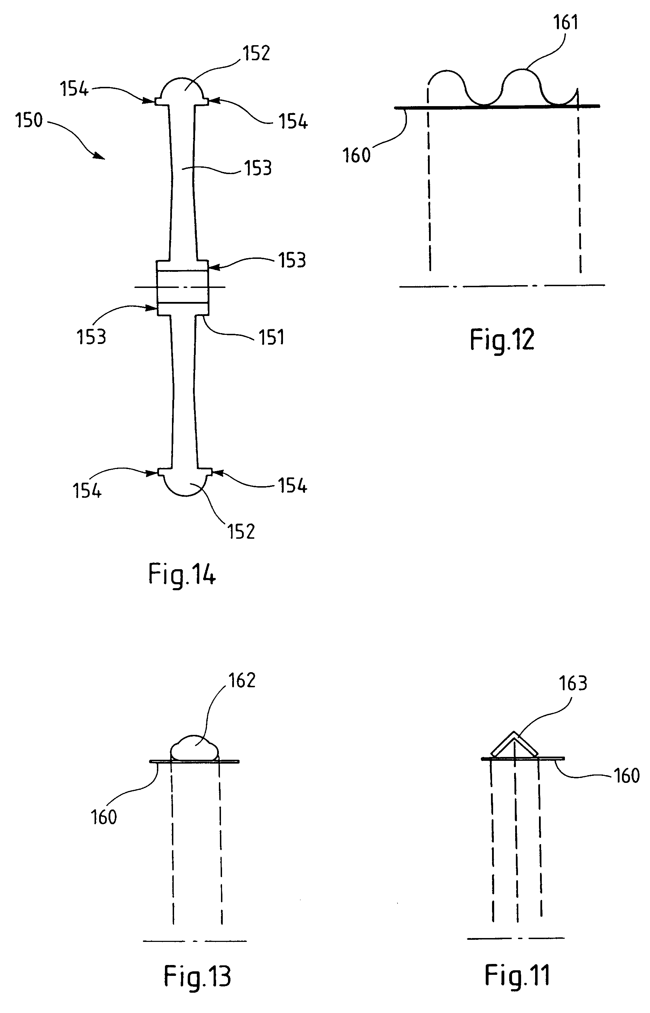

Ainsi qu'on le voit sur la figure 11, le rouleau 22 est formé par un tambour creux 160 sur lequel sont montés une succession régulière d'anneaux 163 (dont un seul est montré) faits chacun à partir d'un profilé en cornière. Dans la variante montrée sur la figure 12, les anneaux 164 sont faits à partir de tôle ondulée ; et dans la variante de la figure 13, les anneaux 162 sont faits à partir de tôle plate travaillée pour lui donner la forme représentée.

Dans la variante montrée sur la figure 14, le rouleau est formé d'un ensemble de disques 150, dont l'un est illustré sur la figure 14, ces disques étant montés sur un arbre central commun et maintenus serrés les uns contre les autres. Le disque 150 comporte un moyeu central 151 avec un alésage correspondant au diamètre de l'arbre central commun, une jante 152 située en périphérie, et un voile 153, plus étroit que le moyeu et la jante, qui relie ceux-ci. Lorsque les disques 150 sont montés sur l'arbre central, ils prennent appui les uns contre les autres par l'intermédiaire des surfaces radiales 154 des jantes 152, et par les surfaces radiales 153 du moyeu 151, les surfaces 153 et 154 étant coplanaires de chaque côté.

Diverses formes peuvent être adoptées pour les pleins et les creux du rouleau, on voit par exemple que le rouleau formé avec les disques 150 comporte des pleins arrondis relativement larges avec des creux à fond plat relativement étroits, le rouleau formé comme montré sur la figure 12 présente une surface de contact avec le sol ayant une succession de pleins et de creux arrondis de même largeur, le rouleau formé comme sur la figure 13 présente des pleins avec trois arrondis, et le rouleau formé comme montré sur la figure 11 a des pleins à section en triangle, c'est-à-dire avec une arête étroite à son sommet.

Cette surface de contact avec le sol qui est fermée et qui présente une succession régulière de pleins et de creux annulaires permet au rouleau de remplir sa fonction de nivellement dans les meilleures conditions, le caractère fermé empêchant que l'intérieur du rouleau se charge de terre, la succession régulière de pleins et de creux permettant de briser les languettes de terre, un peu comme les rouleaux brise-mottes classiques, mais sans avoir l'agressivité de ceux-ci qui serait néfaste au sol sur lequel on travaille.

En outre, cette succession de pleins et de creux permet une certaine prise du rouleau dans le sol qui facilite sa fonction de direction de la machine, cette succession empêchant en même temps que les résidus d'herbe et de terre ne se collent au rouleau ; et après le passage de la machine il subsiste un rainurage discret du sol, qui permet au conducteur de la machine de repérer les endroits où celle-ci est déjà passée.

La machine illustrée est spécialement prévue pour l'entretien des pistes de courses ou d'entraînements hippiques. Sa largeur est de trois mètres, de sorte qu'elle peut parcourir l'ensemble de la piste en trois tours, les pistes ayant généralement une largeur de neuf mètres. Dans une variante non représentée, la machine a directement une largeur de neuf mètres, ce qui permet l'entretien d'une piste en un seul tour.

En fonction du nombre de distributeurs hydrauliques du tracteur, il est possible d'utiliser directement la centrale hydraulique de celui-ci pour alimenter la partie poussée de la machine qui est semi-portée à l'avant du tracteur, plutôt que de prévoir l'ensemble 120.

Dans l'exemple illustré, les roues motrices utilisées pour faire la machine se déplacer sont celles du tracteur 25, mais en variante il est possible de prévoir une machine automotrice, où le tracteur serait remplacé par un ensemble à roues motrices.

La machine 20 est spécialement continue pour l'entretien des pistes de courses hippiques, mais elle donne des résultats tout à fait satisfaisants sur d'autres terrains de sports, par exemple de foot-bail, de rugby, de golf, ou de polo. Elle peut également être utile dans les prairies, afin de reboucher les trous qui causent parfois des chutes et des blessures aux animaux que l'on y met en pâturage.

Dans une variante non illustrée du dispositif de remplissage de trous, le système à palpeurs mécaniques 102 est remplacé par un oeil électronique qui détecte la présence de trous, et qui dans ce dernier cas agissent sur une commande pour déverser de la matière de remplissage dans le trou détecté. Cette matière peut être également du sable ou de la terre en vrac, éventuellement mélangé à des graines d'herbe.

On notera que, en fonction des circonstances, le rateau rotatif, le rouleau, le dispositif de remplissage de trous, le dispositif de damage, et le dispositif releveur d'herbe peuvent être utilisés individuellement.

On peut par exemple utiliser uniquement le rateau rotatif, pour effectuer entre deux courses un rebouchage rapide et simple des trous, sans tassage.

On notera également que le système qui permet le relevage de l'outil de travail du sol 21 en même temps qu'on abaisse les roues 73, peut être utilisé dans une autre machine que la machine 20.

On notera enfin que le système de montage du rouleau 22 peut être utilisé dans une autre machine, en particulier une machine longue poussée, pour un rouleau qui peut être différent, par exemple avec une surface de contact avec le sol qui est lisse.

On rappelle que l'invention n'est pas limitée aux exemples de réalisation décrits et représentés.

## Revendications

1. Procédé pour l'entretien d'un terrain planté d'herbe, caractérisé en ce qu'on rebouche des trous (11)qui y ont été effectués en faisant parcourir ledit terrain par une machine (20) comportant un rateau rotatif (21)à l'extrême avant, et un dispositif (24) de damage du sol derrière le rateau rotatif.

2. Procédé selon la revendication 1, caractérisé en ce que pour l'entretien d'une piste de courses ou d'entraînements hippiques engazonnée, on rebouche les trous (11) que les chevaux y ont effectué avec une machine (20) comportant un rateau rotatif (21) à l'extrême avant, entraîné pour tourner avec une vitesse tangentielle au sol allant de l'arrière vers l'avant, et un dispositif (24) de damage du sol derrière le rateau rotatif, en faisant parcourir la piste par la machine dans un sens inverse (27) à celui (1) dans lequel les chevaux se sont déplacés.

3. Procédé selon la revendication 1, caractérisé en ce que pour l'entretien d'une piste de courses ou d'entraînements hippiques engazonnée, on rebouche les trous (11) que les chevaux y ont effectué avec une machine (20) comportant un rateau rotatif (21) à l'extrême avant, entraîné pour tourner avec une vitesse tangentielle au sol allant de l'avant vers l'arrière, et un dispositif (24) de damage du sol derrière le rateau rotatif, en faisant parcourir la piste par la machine dans le même sens que celui (1) dans lequel les chevaux se sont déplacés.

4. Machine pour l'entretien d'un terrain planté d'herbe, caractérisée en ce qu'elle est destinée à parcourir ledit terrain pour reboucher des trous (11) qui y ont été effectués, et en ce qu'elle comporte à cet effet :
- un rateau rotatif (21) disposé à l'extrême avant de la machine (20) ; et
- un dispositif (24) de damage du sol, disposé derrière le rateau rotatif (21).

5. Machine selon la revendication 4, caractérisée en ce qu'elle comporte, derrière le rateau rotatif (21) et devant le dispositif de damage (24), un dispositif (23) de remplissage de trous comportant :
- des moyens (100, 101) de stockage d'une matière de remplissage ;
- des moyens (102) de détection de trous ; et
- des moyens (101, 104) pour déverser sur le sol de la matière de remplissage quant un trou est détecté.

6. Machine selon la revendication 5, caractérisée en ce que le dispositif de remplissage de trous (23) comporte une trémie (100) qui débouche à sa base dans une multitude de cheminées (101) à chacune desquelles correspond un palpeur (102) en forme de patin allongé disposé longitudinalement en avant de la cheminée (101).

7. Machine selon la revendication 6, caractérisée en ce que la matière de remplissage est formée par des galettes de terre sur chacune desquelles pousse du gazon.

8. Machine selon l'une quelconque des revendications 5 à 7, caractérisée en ce qu'elle comporte un rouleau (22) disposé derrière le rateau (21) rotatif et devant le dispositif de remplissage de trous (23).

9. Machine selon l'une quelconque des revendications 4 à 8, caractérisée en ce qu'elle comporte un rouleau (22) disposé derrière le rateau rotatif (21) et devant le dispositif de damage (24).

10. Machine selon la revendication 9, caractérisée en ce qu'elle comporte des moyens (86, 90, 91, 92) de commande de l'orientation de l'axe de rotation dudit rouleau (22).

11. Machine selon la revendication 10, caractérisée en ce que le rouleau (22) est monté sur un faux châssis (82) articulé par rapport à un bâti (40) de la machine, un vérin (92) étant disposé entre ce bâti (40) et le faux châssis (82).

12. Machine selon l'une quelconque des revendications 9 à 11, caractérisée en ce que le rouleau (22) est muni d'une surface de contact avec le sol qui est fermée et qui présente une succession régulière de pleins et de creux annulaires (80, 81).

13. Machine selon la revendication 12, caractérisée en ce que le rouleau (22) est formé d'un ensemble de disques (150) montés sur un arbre central commun, et maintenus serrés les uns contre les autres.

14. Machine selon la revendication 12, caractérisée en ce que le rouleau (22) est formé d'un tambour (160) sur lequel est montée une succession régulière d'anneaux (161, 162, 163).

15. Machine selon l'une quelconque des revendications 9 à 14, caractérisée en ce que le rouleau (22) est monté librement à rotation sur la machine.

16. Machine selon l'une quelconque des revendications 9 à 14, caractérisée en ce que le rouleau (22) est entraîné par un moteur asservi de sorte que le rouleau ait une vitesse tangentielle égale à la vitesse d'avancement de la machine.

17. Machine selon l'une quelconque des revendications 9 à 16, caractérisée en ce qu'elle comporte un bâti (40) par rapport auquel le rouleau est suspendu de sorte qu'en position de travail il ne supporte pratiquement aucun effort vertical provenant du bâti.

18. Machine selon l'une quelconque des revendications 4 à 17, caractérisée en ce qu'elle comporte des roues motrices disposées derrière le dispositif de damage (24).

19. Machine selon la revendication 18, caractérisée en ce que lesdites roues motrices font partie d'un tracteur (25).

20. Machine selon l'une quelconque des revendications 4 à 19, caractérisée en ce qu'elle comporte un dispositif (26) releveur d'herbe, disposé à l'extrême arrière.

21. Machine selon la revendication 20, caractérisée en ce que le dispositif releveur d'herbe (26) comporte au moins un peigne rotatif (138, 139) entraîné pour tourner avec une vitesse tangentielle au sol allant de l'avant vers l'arrière.

22. Machine selon l'une quelconque des revendications 4 à 21, caractérisée en ce que le rateau rotatif (21) comporte un tambour central sur lequel est montée une pluralité de dents souples (47).

23. Machine selon la revendication 22, caractérisé en ce que chaque dent souple (47) est formée d'un fil d'acier avec un enroulement en spirale entre une extrémité de fixation sur le tambour et une portion rectiligne s'étendant jusqu'à l'extrémité libre de la dent.

24. Machine selon l'une quelconque des revendications 22 ou 23, caractérisé en ce que l'extrémité libre de chaque dent (47) est munie d'un embout (48) en matière plastique.

25. Machine selon l'une quelconque des revendications 4 à 24, caractérisé en ce que le rateau rotatif (21) est supporté par des roues (59) réglables en hauteur.

26. Machine selon l'une quelconque des revendications 4 à 25, caractérisée en ce qu'elle comporte des moyens (44) pour maintenir le rateau rotatif (21) transversal à une direction de déplacement prévue pour la machine.

27. Machine selon l'une quelconque des revendications 4 à 26, caractérisée en ce qu'elle comporte des moyens (44) pour maintenir le rateau rotatif (21) oblique par rapport à une direction de déplacement prévue pour la machine.

28. Machine selon l'une quelconque des revendications 4 à 27, caractérisée en ce qu'elle comporte des moyens pour permettre au rateau rotatif d'osciller autour d'un axe de tangage (64) et autour d'un axe de roulis (66).

29. Machine selon la revendication 28, caractérisée en ce qu'elle comporte au moins un amortisseur (67) pour limiter les mouvements de roulis et de tangage.

30. Machine selon l'une quelconque des revendications 4 à 29, caractérisée en ce qu'elle comporte un bâti (40) sur lequel est articulé autour d'un axe horizontal (64) une structure (44) qui porte le rateau rotatif (21), avec au moins un lien (67) entre la structure (44) et une poutre (68) montée coulissante en hauteur par rapport au bâti, de sorte que la structure (44) se relève lorsqu'on abaisse la poutre (68).

31. Machine selon la revendication 30, caractérisée en ce qu'un système à roues directrices (73) est monté sur ladite poutre (68).

32. Machine selon l'une quelconque des revendications 4 à 31, caractérisée en ce que le dispositif de damage (24) a la forme générale d'un cylindre qui est monté à rotation sur la machine, comportant un arbre central (112) et des semelles périphériques de damage (113) reliées chacune à l'arbre central (112) par au moins un rayon (114) axialement élastique.

33. Machine selon la revendication 32, caractérisée en ce que chaque rayon (114) comporte deux éléments formant un assemblage télescopique, et un ressort.

34. Machine selon l'une quelconque des revendications 32 à 33, caractérisée en ce que les semelles (113) sont associées en plusieurs rangées comportant chacune plusieurs semelles.

35. Machine selon l'une quelconque des revendications 32 à 34, caractérisée en ce que le dispositif de damage est monté librement à rotation sur la machine.

36. Machine selon l'une quelconque des revendications 32 à 35, caractérisée en ce que le dispositif de damage (24) est entraîné par un moteur asservi de sorte que le dispositif de damage ait une vitesse tangentielle égale à la vitesse d'avancement de la machine.

37. Machine selon l'une quelconque des revendications 32 à 36, caractérisée en ce qu'elle comporte un bâti (40) par rapport auquel le dispositif de damage (24) est suspendu de sorte qu'en position de travail il supporte au moins une partie du poids du bâti.

38. Procédé selon l'une quelconque des revendications 1 à 3, caractérisé en ce qu'on utilise une machine selon l'une quelconque des revendications 4 à 37.

## Claims

1. A method of repairing a ground area planted with grass, characterised in that holes (11) which have been made therein are filled by causing a machine (20), comprising a rotary rake (21) at its extreme front end and a ground consolidating device (24) behind the rotary rake, to pass over the said ground area.

2. A method according to Claim 1, characterised in that, for repairing the turf of a racecourse or equestrian training ground, holes (11) which have been made therein by the horses are filled by a machine (20) that includes a rotary rake at its extreme front end, the rake being driven so as to rotate with a forward velocity tangential to the ground, by causing the machine to travel over the course in a direction (27) opposite to that (1) in which the horses have passed.

3. A method according to Claim 1, characterised in that, for repairing the turf of a racecourse or equestrian training ground, holes (11) which have been made therein by the horses are filled using a machine (20) that comprises, at its extreme front end a rotary rake (21) driven so as to rotate with a rearward velocity tangential to the ground, and a ground consolidating device (24) behind the rotary rake, by causing the machine to travel over the course in the same direction as that (1) in which the horses have passed.

4. A machine for repairing a ground area planted with grass, characterised in that it is adapted to travel over the said ground area for the purpose of filling holes (11) which have been made therein, and in that in includes for this purpose:
- a rotary rake (21) disposed at the extreme front end of the machine (20); and
- a ground consolidating device (24) disposed behind the rotary rake (21).

5. A machine according to Claim 4, characterised in that it includes, behind the rotary rake (21) and in front of the consolidating device (24), a hole filling device (23) comprising:
- means (100, 101) for storing a filling material;
- means (102) for detecting holes; and
- means (101, 104) for depositing some of the filling material on the ground when a hole is detected.

6. A machine according to Claim 5, characterised in that the hole filling device (23) includes a hopper (100) which opens at its base into a multiplicity of chutes (101), with, corresponding to each chute, a feeler (102) in the form of an elongate shoe disposed longitudinally in front of the chute (101).

7. A machine according to Claim 6, characterised in that the filling material comprises sods of earth with turf pressing on each sod.

8. A machine according to any one of Claims 5 to 7, characterised in that it includes a roller (22) disposed behind the rotary rake (21) and in front of the hole filling device (23).

9. A machine according to any one of Claims 4 to 8, characterised in that it includes a roller (22) disposed behind the rotary rake (21) and in front of the consolidating device (24).

10. A machine according to Claim 9, characterised in that it includes means (86, 90, 91, 92) for controlling the orientation of the axis of rotation of the said roller (22).

11. A machine according to Claim 10, characterised in that the roller (22) is mounted on a sub-frame (82) which is articulated with respect to a chassis (40) of the machine, with a jack (92) being disposed between the said chassis (40) and the sub-frame (82).

12. A machine according to any one of Claims 9 to 11, characterised in that the roller (22) has a ground contact surface which is closed and which defines a regular succession of annular lands and grooves (80, 81).

13. A machine according to Claim 12, characterised in that the roller (22) comprises a set of discs (150) mounted on a common central shaft and held clamped against each other.

14. A machine according to Claim 12, characterised in that the roller (22) comprises a drum (160) on which a regular succession of rings (161, 162, 163) is mounted.

15. A machine according to any one of Claims 9 to 14, characterised in that the roller (22) is mounted for free rotation on the machine.

16. A machine according to any one of Claims 9 to 14, characterised in that the roller (22) is driven by a motor which is synchronised so that the roller has a tangential velocity which is equal to the speed of forward travel of the machine.

17. A machine according to any one of Claims 9 to 16, characterised in that it includes a chassis (40) with respect to which the roller is suspended, so that in its working position, it transmits hardly any vertical force from the chassis.

18. A machine according to any one of Claims 4 to 17, characterised in that it includes driving wheels disposed behind the consolidating device (24).

19. A machine according to Claim 18, characterised in that the said driving wheels are part of a tractor (25).

20. A machine according to any one of Claims 4 to 19, characterised in that it includes a grass dressing device (26) disposed at the extreme rear end.

21. A machine according to Claim 20, characterised in that the grass dressing device (26) comprises at least one rotary comb (138, 139) which is driven so as to rotate with a rearward velocity tangential to the ground.

22. A machine according to any one of Claims 4 to 21, characterised in that the rotary rake (21) comprises a central drum on which a plurality of flexible teeth (47) are mounted.

23. A machine according to Claim 22, characterised in that each flexible tooth (47) comprises a steel wire with a spiral winding between one end, which is secured on the drum, and a rectilinear portion extending to the free end of the tooth.

24. A machine according to Claim 22 or Claim 23, characterised in that the free end of each tooth (47) has a tip (48) of plastics material.

25. A machine according to any one of Claims 4 to 24, characterised in that the rotary rake (21) is supported by wheels (59) which are adjustable for height.

26. A machine according to any one of Claims 4 to 25, characterised in that it includes means (44) for maintaining the rotary rake (21) in an orientation transverse to a direction of travel of the machine.

27. A machine according to any one of Claims 4 to 26, characterised in that it includes means (44) for maintaining the rotary rake (21) in an orientation oblique with respect to a direction of travel of the machine.

28. A machine according to any one of Claims 4 to 27, characterised in that it includes means for enabling the rotary rake to oscillate about a pitch axis (64) and about a roll axis (66).

29. A machine according to Claim 28, characterised in that it includes at least one damper (67) for limiting the rolling and pitching movements.

30. A machine according to any one of Claims 4 to 29, characterised in that it includes a chassis (40) on which a structure (44) which carries the rotary rake (21) is articulated about a horizontal axis (64), with at least one link (67), between the structure (44) and a beam (68) which is mounted for up and down sliding movement with respect to the chassis, whereby the structure (44) can be raised when the beam (68) is lowered.

31. A machine according to Claim 30, characterised in that a system having steerable wheels (73) is mounted on the said beam (68).

32. A machine according to any one of Claims 4 to 31, characterised in that the consolidating device (24) is in the general form of a cylinder which is mounted for rotation on the machine, and which comprises a central shaft (112) and a plurality of peripheral tamping shoes (113), each of which is connected to the central shaft (112) by means of at least one axially resilient spoke (114).

33. A machine according to Claim 32, characterised in that each spoke (114) comprises two elements defining a telescopic assembly, together with a spring.

34. A machine according to Claim 32 or Claim 33, characterised in that the shoes (113) are associated with each other in a plurality of rows, each of which consists of a plurality of shoes.

35. A machine according to any one of Claims 32 to 34, characterised in that the consolidating device is mounted for free rotation on the machine.

36. A machine according to any one of Claims 32 to 35, characterised in that the consolidating device (24) is driven by a motor which is synchronised so that the consolidating device has a tangential velocity equal to the speed of forward travel of the machine.

37. A machine according to any one of Claims 32 to 36, characterised in that it includes a chassis (40), with respect to which the consolidating device (24) is suspended so that, in the working position, it supports at least part of the weight of the chassis.

38. A method according to any one of Claims 1 to 3, characterised in that a machine according to any one of Claims 4 to 37 is used.

## Patentansprüche

1. Verfahren zum Pflegen einer Rasenfläche, dadurch gekennzeichnet, daß man Löcher (11), die dort ausgebildet sind, zustopft, indem man den Boden mittels einer Maschine (20) befahrt, die einen Drehrechen (21) an ihrem vorderen Ende sowie eine Einrichtung (24) zum Stampfen des Bodens hinter dem Drehrechen aufweist.

2. Verfahren nach Anspruch 1, dadurch gekennzeichnet, daß man zum Pflegen einer begrünten Pferderenn- oder Pferdetrainingsbahn die Löcher (11), welche die Pferde dort geschaffen haben, mit einer Maschine (20) zustopft, die einen Drehrechen (21) an ihrem vorderen Ende, der so angetrieben ist, daß er sich am Boden mit einer von hinten nach vorne gerichteten Tangentialgeschwindigkeit dreht, und eine Einrichtung (24) zum Stampfen des Bodens hinter dem Drehrechen aufweist, indem man die Bahn mit der Maschine in einer der Laufrichtung (1) der Pferde entgegengesetzten Richtung (27) befährt.

3. Verfahren nach Anspruch 1, dadurch gekennzeichnet, daß man zum Pflegen einer begrünten Pferderenn- oder Pferdetrainingsbahn die Löcher (11), welche die Pferde dort geschaffen haben, mit einer Maschine (20) zustopft, die einen Drehrechen (21) an ihrem vorderen Ende aufweist, der so angetrieben ist, daß er sich am Boden mit einer von hinten nach vorne gerichteten Tangentialgeschwindigkeit dreht, und eine Einrichtung (24) zum Stampfen des Bodens hinter dem Drehrechen aufweist, indem man die Bahn mit der Maschine in derselben Richtung, die der Laufrichtung (1) der Pferde entspricht, befährt.

4. Maschine zum Pflegen einer Rasenfläche, dadurch gekennzeichnet, daß sie dazu bestimmt ist, diese Rasenflache zu befahren, um Löcher (11), die dort ausgebildet sind, zu stopfen, und daß sie zu diesem Zweck folgende Bestandteile aufweist:
- einen Drehrechen (21), der am vorderen Ende der Maschine (20) angebracht ist, und
- eine Einrichtung (24) zum Stampfen des Bodens, die hinter dem Drehrechen (21) vorgesehen ist.

5. Maschine nach Anspruch 4, dadurch gekennzeichnet, daß sie hinter dem Drehrechen (21) und vor der Einrichtung (24) zum Stampfen eine Einrichtung (23) zum Wiederauffüllen von Löchern aufweist, die folgende Bestandteile enthält:
- Mittel (100, 101) zum Speichern eines Auffüllstoffes;
- Mittel (102) zum Feststellen von Löchern, und
- Mittel (101, 104) zur Abgabe des Auffüllstoffes auf den Boden, sobald ein Loch festgestellt wurde.

6. Maschine nach Anspruch 5, dadurch gekennzeichnet, daß die Einrichtung (23) zum Wiederauffüllen von Löchern einen Trichter (100) aufweist, der an seiner Basis in eine Vielzahl von Schächten (101) mündet, deren jedem ein Fühler (102) in Form einer länglichen, vor dem Schacht (101) in Längsrichtung angebrachten Kufe zugeordnet ist.

7. Maschine nach Anspruch 6, dadurch gekennzeichnet, daß der Auffüllstoff von Erdbatzen gebildet wird, auf deren jedem Gras wächst.

8. Maschine nach einem der Ansprüche 5 bis 7, dadurch gekennzeichnet, daß sie eine Walze (22) aufweist, die hinter dem Drehrechen (21) und vor der Einrichtung (23) zum Wiederauffüllen von Löchern angebracht ist.

9. Maschine nach einem der Ansprüche 4 bis 8, dadurch gekennzeichnet, daß sie eine Walze (22) enthält, die hinter dem Drehrechen (21) und vor der Einrichtung zum Stampfen (24) angebracht ist.

10. Maschine nach Anspruch 9, dadurch gekennzeichnet, daß sie Mittel (86, 90, 91, 92) zum Steuern der Ausrichtung der Drehachse der Walze (22) aufweist.

11. Maschine nach Anspruch 10, dadurch gekennzeichnet, daß die Walze (22) an einem Zwischenrahmen (82) montiert ist, der an einem Maschinengestell (40) angelenkt ist, wobei ein Zylinder (92) zwischen diesem Gestell (40) und dem Zwischenrahmen (82) angeordnet ist.

12. Maschine nach einem der Ansprüche 9 bis 11, dadurch gekennzeichnet, daß die Walze (22) mit einer Boden-Kontaktfläche versehen ist, die geschlossen verläuft und in regelmäßiger Abfolge ringförmige Erhöhungen und Vertiefungen (80, 81) aufweist.

13. Maschine nach Anspruch 12, dadurch gekennzeichnet, daß die Walze (22) aus einer Gesamtheit von Scheiben (150) besteht, die auf einer gemeinsamen Mittelachse montiert und gegeneinander verspannt gehalten sind.

14. Maschine nach Anspruch 12, dadurch gekennzeichnet, daß die Walze (22) von einer Trommel (160) gebildet wird, auf der in regelmäßiger Abfolge Ringe (161, 162, 163) angebracht sind.

15. Maschine nach einem der Ansprüche 9 bis 14, dadurch gekennzeichnet, daß die Walze frei drehbar an der Maschine montiert ist.

16. Maschine nach einem der Ansprüche 9 bis 14, dadurch gekennzeichnet, daß die Walze (22) von einem Motor angetrieben wird, der so gesteuert ist, daß die Walze eine Tangentialgeschwindigkeit gleich der Vorwärtsgeschwindigkeit der Maschine hat.

17. Maschine nach einem der Ansprüche 9 bis 16, dadurch gekennzeichnet, daß sie ein Gestell (40) aufweist, an dem die Walze derart aufgehängt ist, daß sie in Arbeitsstellung praktisch keine vom Gestell herrührende Vertikalkraft aufnimmt.

18. Maschine nach einem der Ansprüche 4 bis 17, dadurch gekennzeichnet, daß sie Antriebsräder aufweist, die hinter der Einrichtung (24) zum Stampfen angeordnet sind.

19. Maschine nach Anspruch 18, dadurch gekennzeichnet, daß die Antriebsräder Teil einer Zugmaschine (25) sind.

20. Maschine nach einem der Ansprüche 4 bis 19, dadurch gekennzeichnet, daß sie eine am hinteren Ende angeordnete Einrichtung (26) zum Aufrichten des Rasens aufweist.

21. Maschine nach Anspruch 20, dadurch gekennzeichnet, daß die Einrichtung (26) zum Aufrichten des Rasens wenigstens einen Drehkamm (138, 139) aufweist, der so angetrieben wird, daß er sich am Boden mit einer von vorne nach hinten gerichteten Tangentialgeschwindigkeit dreht.

22. Maschine nach einem der Ansprüche 4 bis 21, dadurch gekennzeichnet, daß der Drehrechen (21) eine Mitteltrommel aufweist, auf der eine Vielzahl biegsamer Zähne befestigt ist.

23. Maschine nach Anspruch 22, dadurch gekennzeichnet, daß jeder nachgiebige Zahn (27) von einem Stahldraht mit einer Spiralwicklung zwischen seinem einen Befestigungsende auf der Trommel und einem geradlinigen Abschnitt aufweist, der sich bis an das freie Ende des Zahnes erstreckt.

24. Maschine nach einem der Ansprüche 22 oder 23, dadurch gekennzeichnet, daß das freie Ende jedes Zahnes (47) mit einer aus Kunststoff bestehenden Endhülse (48) versehen ist.

25. Maschine nach einem der Ansprüche 4 bis 24, dadurch gekennzeichnet, daß der Drehrechen (21) von höhenverstellbaren Rädern (59) getragen wird.

26. Maschine nach einem der Ansprüche 4 bis 25, dadurch gekennzeichnet, daß sie Mittel (44) aufweist, mit denen der Drehrechen (21) quer zu einer für die Maschine vorgesehenen Verfahrrichtung gehalten wird.

27. Maschine nach einem der Ansprüche 4 bis 26, dadurch gekennzeichnet, daß sie Mittel (44) aufweist, mit denen der Drehrechen (21) schräg zu einer für die Maschine vorgesehenen Verfahrrichtung gehalten wird.

28. Maschine nach einem der Ansprüche 4 bis 27, dadurch gekennzeichnet, daß sie Mittel aufweist, die es gestatten, daß der Drehrechen um eine Nickachse (64) und um eine Rollachse (66) schwingen kann.

29. Maschine nach Anspruch 28, dadurch gekennzeichnet, daß sie wenigstens einen Dämpfer (67) zur Begrenzung der Roll- und Nickbewegungen aufweist.

30. Maschine nach einem der Ansprüche 4 bis 29, dadurch gekennzeichnet, daß sie ein Gestell (40) aufweist, an dem um eine Horizontalachse (64) verschwenkbar ein Aufbau (44) angelenkt ist, der den Drehrechen (21) trägt, wobei wenigstens ein Verbindungsglied (67) zwischen dem Aufbau (44) und einem Träger (68) angebracht ist, der am Rahmen höhenverschiebbar derart montiert ist, daß der Aufbau (44) sich hebt, wenn man den Träger (68) absenkt.

31. Maschine nach Anspruch 30, dadurch gekennzeichnet, daß auf dem Träger (68) ein System von Lenkrollen (73) angebracht ist.

32. Maschine nach einem der Ansprüche 4 bis 31, dadurch gekennzeichnet, daß die Einrichtung zum Stampfen (24) allgemein die Form eines Zylinders aufweist, der drehbeweglich auf der Maschine montiert ist, und eine Mittelwelle (112) sowie in Umfangsrichtung verlaufende Stampfplatten (113) aufweist, deren jede an der Mittelwelle (112) durch wenigstens eine in Axialrichtung elastische Speiche (114) befestigt ist.

33. Maschine nach Anspruch 32, dadurch gekennzeichnet, daß jede Speiche (114) zwei Elemente, die eine Teleskopanordnung ausbilden, und eine Feder aufweist.

34. Maschine nach einem der Ansprüche 32 bis 33, dadurch gekennzeichnet, daß die Platten (113) in mehreren Reihen angeordnet sind, deren jede mehrere Platten aufweist.

35. Maschine nach einem der Ansprüche 32 bis 34, dadurch gekennzeichnet, daß die Einrichtung zum Stampfen frei verdrehbar an der Maschine montiert ist.

36. Maschine nach einem der Ansprüche 32 bis 35, dadurch gekennzeichnet, daß die Einrichtung zum Stampfen (24) von einem Motor angetrieben wird, der so gesteuert ist, daß die Einrichtung zum Stampfen eine Tangentialgeschwindigkeit aufweist, die gleich der Bewegungsgeschwindigkeit der Maschine ist.

37. Maschine nach einem der Ansprüche 32 bis 36, dadurch gekennzeichnet, daß sie ein Gestell (40) umfaßt, an dem die Einrichtung zum Stampfen (24) so aufgehängt ist, daß sie in Arbeitslage zumindest einen Teil des Gestellgewichtes abstützt.

38. Verfahren nach einem der Ansprüche 1 bis 3, dadurch gekennzeichnet, daß man eine Maschine nach einem der Ansprüche 4 bis 37 verwendet.
